**Europäisches Patentamt**

**European Patent Office**

**Office européen des brevets**

(11) Veröffentlichungsnummer: **0 444 558 A2**

## (12) EUROPÄISCHE PATENTANMELDUNG

(21) Anmeldenummer: 91102706.8

(22) Anmeldetag: 25.02.91

(51) Int. Cl.⁵: **B60J 1/04**

(30) Priorität: 26.02.90 DE 9002260 U

(43) Veröffentlichungstag der Anmeldung:
04.09.91 Patentblatt 91/36

(84) Benannte Vertragsstaaten:
AT BE CH DE DK ES FR GB GR IT LI LU NL SE

(71) Anmelder: **Karosseriefabrik VOLL GmbH
Tiefe Gasse 11-21
W-8700 Würzburg-Heidingsfeld(DE)**

(72) Erfinder: **Kes, Peter, Dr.-Ing.
Im Grund 19
W-8700 Erzburg-Oderdürrbach(DE)**

(74) Vertreter: **Sperling, Rüdiger, Dipl.-Ing. et al
Patentanwälte Dipl.Ing.S. Staeger
Dipl.Ing.Dipl.Wirtsch.Ing. R Sperling
Müllerstrasse 31
W-8000 München 5(DE)**

(54) Frontgetriebenes Kraftfahrzeug, insbesondere Kleinbus.

(57) Bei einem frontgetriebenen Kleinbus, bei dem die in einem Rahmen eingefaßte, mindestens in einer Richtung gewölbte Windschutzscheibe zusammen mit der Motoren- und Armaturenabdeckung nach oben abschwenkbar ist, greift mindestens ein Hubzylinder mindestens an einer Seite des Rahmens an und sind mindestens zwei biegesteife Bügel zwischen dem Dach des Kraftfahrzeugs und einem in Verlängerung desselben vorgesehenen plattenförmigen Abschnitt des Rahmens der Windschutzscheibe vorgesehen.

FIG. 2

EP 0 444 558 A2

Die Erfindung bezieht sich auf ein frontgetriebenes Kraftfahrzeug, insbesondere Kleinbus, bei dem die in einem Rahmen eingefaßte, mindestens in einer Richtung gewölbte Windschutzscheibe zusammen mit der Motoren- und Armaturenabdeckung nach oben abschwenkbar ist.

Aus der DE-GM 88 15 538.2 ist ein derartiges Kraftfahrzeug bekannt. Durch die aufklappbare Frontpartie wird nicht nur die Sicherheit der Fahrgäste und des Fahrers dadurch erhöht, daß ein zusätzlicher Notausgang geschaffen wird, sondern es ist auch möglich, die Motorwartung von vorne aus vorzunehmen. Bei dieser bekannten hochklappbaren Frontpartie werden zwei Schwinghebelpaare eingesetzt, und zwar ein Paar an der unteren fahrzeugzugekehrten Ecke des Rahmens der Windschutzscheibe und ein zweites Paar in der Nähe des Oberrandes der Windschutzscheibe. Durch die ersterwähnten Schwinghebel ist jedoch die Zugänglichkeit des Motors von der Seite auch bei abgeschwenkter Frontpartie beeinträchtigt. Die beiden Schwinghebelpaare führen darüber hinaus zu einer relativ aufwendigen Konstruktion.

Der Erfindung liegt die Aufgabe zugrunde, einerseits die Seitenzugänglichkeit des Motors bei aufgeklappter Windschutzscheibe zu erleichtern, und andererseits eine einfache Konstruktion zu schaffen.

Die Aufgabe wird dadurch gelöst, daß erfindungsgemäß mindestens ein Hubzylinder mindestens an einer Seite des Rahmens angreift und mindestens zwei biegesteife Bügel zwischen dem Dach des Kraftfahrzeugs und einem in Verlängerung desselben vorgesehenen plattenförmigen Abschnitts des Rahmens der Windschutzscheibe vorgesehen sind.

Die Anlenkung des oder der Hubzylinder am Rahmen der Windschutzscheibe behindert die seitliche Zugänglichkeit des Motors bei aufgeklappter Frontpartie überhaupt nicht. Die Konstruktion von festen Bügeln ist darüber hinaus einfacher als die Anordnung von leicht gebogenen Schwinghebeln im Dachbereich des Kraftfahrzeugs.

Nach einer bevorzugten Ausführungsform der Erfindung ist der Hubzylinder einerseits in einem seitlichen Abschnitt des Rahmens der Windschutzscheibe und andererseits an der Anlageschiene des Rahmens gelenkig gelagert. Die Hubzylinder stören daher weder bei der Zugänglichkeit des Motors bei aufgeklappter Frontpartie noch beeinträchtigen sie das Sichtfeld des Fahrers, wenn die Windschutzscheibe in Wirkstellung ist.

Nach einer besonders bevorzugten Ausführungsform der Erfindung sind die Bügel an ihren fahrzeugseitigen Enden gelenkig gelagert und am plattenförmigen Abschnitt des Rahmens der Windschutzscheibe fest angebracht. Hierdurch wird nicht nur ein genau definierter Weg beim Heraufschwenken der Frontpartie erreicht, sondern auch ein Gelenk zwischen den oberen Schwinghebeln und dem Rahmen der Windschutzscheibe eingespart.

Auf der Zeichnung ist eine beispielsweise Ausführungsform der Neuerung dargestellt; es zeigt:

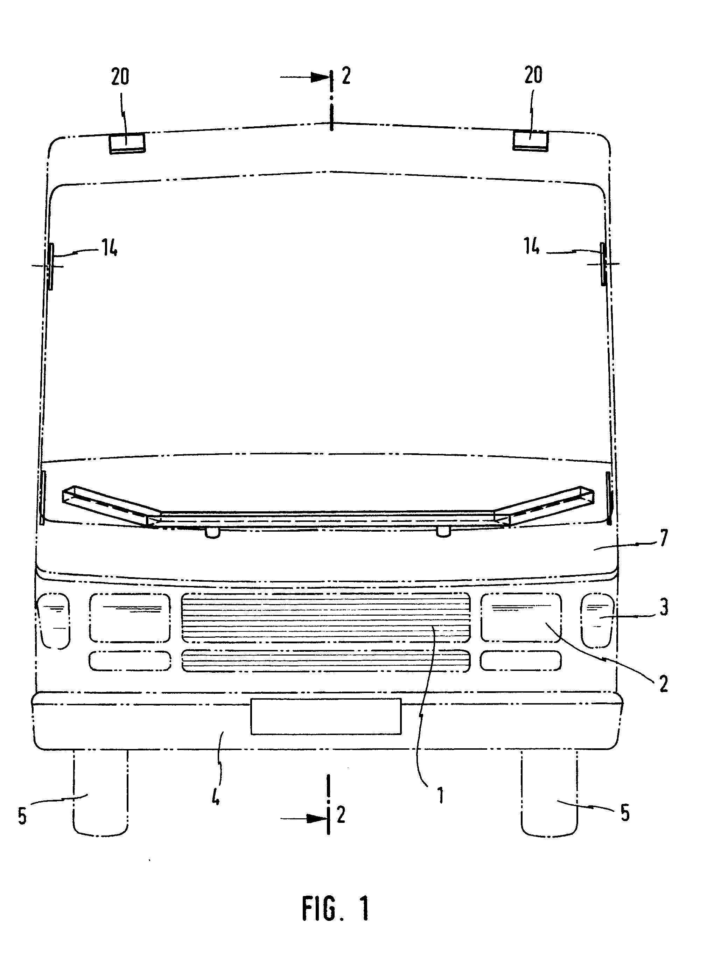

Fig. 1    eine Frontansicht auf eine Ausführungsform der Neuerung und

Fig. 2    einen Schnitt gemäß Linie 2-2 in Fig. 1.

Ein Kleinbus weist an der Frontseite in üblicher Weise einen Kühlerrost 1, Scheinwerfer 2, eine Blinkanlage 3 und eine Stoßstange 4 auf. Mit strichierten Linien sind auch die beiden Vorderräder 5 angedeutet.

Eine nur in einer Richtung gewölbte Windschutzscheibe 6 weist einen z.B. metallischen Rahmen 7 auf.

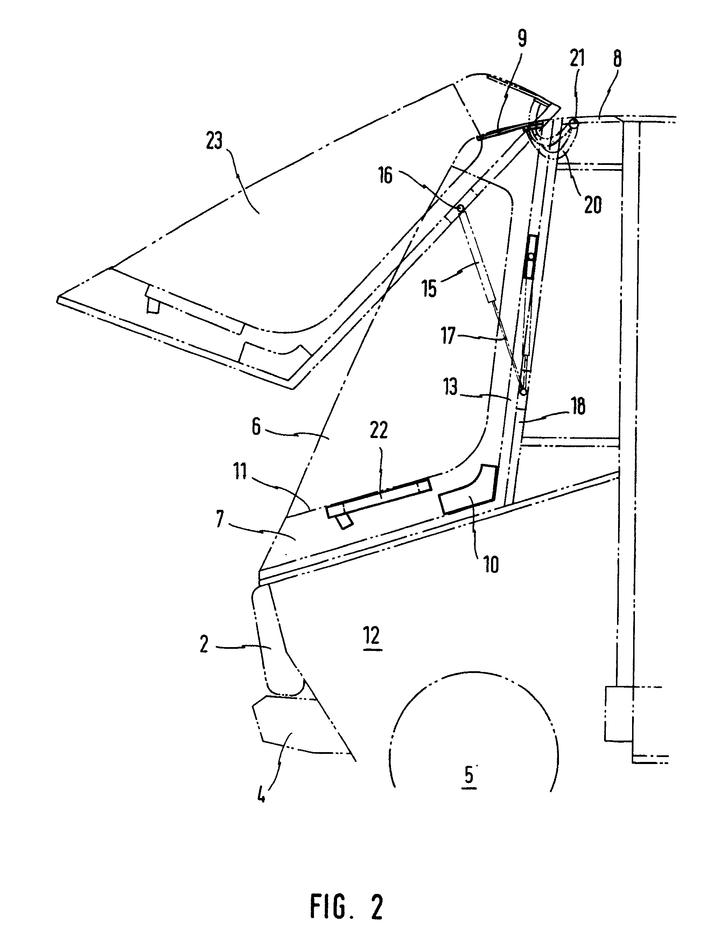

Die Vorderflächen der Windschutzscheibe 6 und des Rahmens 7 verlaufen annähernd bündig, wobei - wie aus Fig. 2 ersichtlich - die Rahmenvorderseite im unteren horizontalen Bereich mit der Vorderseite des Kleinbusses bündig verläuft.

Der Rahmen 7 ist in seinem oberen horizontalen Bereich so ausgebildet, daß er in Verlängerung des Daches 8 des Kleinbusses mit einer Verstärkungsplatte 9 versehen ist. Abgesehen davon ist der Rahmen noch durch Verstärkungsplättchen 10 in den fahrzeugzugekehrten unteren Ecken ausgesteift.

Der nicht im einzelnen gezeigte Motor 12 ist durch eine nicht näher dargestellte, im Bereich der strichierten Linie 11 angeordnete Platte abgedeckt. Diese Platte deckt auch die nicht näher dargestellte Armatur des Kleinbusses von der Frontseite aus zu.

In den seitlichen Rahmenabschnitten 13 des Rahmens 7 sind an Verstärkungsplatten 14 die freien Enden von Hubzylinder 15 durch Gelenke 16 angebracht, während die freien Enden der Hubstangen 17 an der Anlageschiene 18 für den Rahmen 7 angelenkt sind. Zwischen der Anlageschiene 18 und dem Rahmen 7 sind in üblicher Weise Gummidichtungen vorgesehen.

An der Platte 9 im oberen Bereich der Windschutzscheibe bzw. des Rahmens 7 sind biegesteife Bügel 23 fest angebracht; die anderen Enden dieser Bügel sind über Gelenke 21 mit dem Dach 8 des Kraftfahrzeugs verbunden. Viereckrohre 22 verstärken die Motorabdeckung und dienen gegebenenfalls zu Kühlungs- bzw. Lüftungszwecken. Die durch den Rahmen 7 gehaltene Windschutzscheibe 23 ist in einer Richtung gewölbt, so daß der Fahrer durch die Windschutzscheibe nicht nur unmittelbar eine Sicht nach vorne, sondern auch nach beiden Seiten erhält.

**Patentansprüche**

1. Frontgetriebenes Kraftfahrzeug, insbesondere Kleinbus, bei dem die in einen Rahmen eingefaßte, mindestens in einer Richtung gewölbte Windschutzscheibe zusammen mit der Motoren- und Armaturenabdeckung nach oben abschwenkbar ist, dadurch gekennzeichnet, daß mindestens ein Hubzylinder mindestens an einer Seite des Rahmens angreift und mindestens zwei biegesteife Bügel zwischen dem Dach des Kraftfahrzeugs und einem in Verlängerung desselben vorgesehenen plattenförmigen Abschnitt des Rahmens der Windschutzscheibe vorgesehen sind.

2. Kraftfahrzeug nach Anspruch 1, dadurch gekennzeichnet, daß der Hubzylinder einerseits in einem seitlichen Abschnitt des Rahmens der Windschutzscheibe und andererseits an der Anlageschiene des Rahmens gelenkig gelagert ist.

3. Kraftfahrzeug nach Anspruch 1 oder 2, dadurch gekennzeichnet, daß die Bügel an ihren fahrzeugseitigen Enden gelenkig gelagert und am plattenförmigen Abschnitt des Rahmens der Windschutzscheibe selbst angebracht sind.

FIG. 1

4

FIG. 2